**Europäisches Patentamt**

(19) **European Patent Office**

**Office européen des brevets**

(11) Veröffentlichungsnummer: **0 116 151**
**B1**

(12) # EUROPÄISCHE PATENTSCHRIFT

(45) Veröffentlichungstag der Patentschrift:
**20.05.87**

(51) Int. Cl.⁴: **C 11 D 11/00,** C 02 F 1/54,
C 02 F 1/56

(21) Anmeldenummer: **83112585.1**

(22) Anmeldetag: **14.12.83**

(54) **Verfahren zur Regenerierung bzw. zum Recycling von wässrigen Entfettungs- und Reinigungslösungen.**

(30) Priorität: **22.12.82 DE 3247431**

(43) Veröffentlichungstag der Anmeldung:
**22.08.84 Patentblatt 84/34**

(45) Bekanntmachung des Hinweises auf die Patenterteilung:
**20.05.87 Patentblatt 87/21**

(84) Benannte Vertragsstaaten:
**AT BE DE FR GB IT NL**

(56) Entgegenhaltungen:
**EP-A-0 075 243**
**DE-A-2 412 452**
**DE-B-2 334 766**
**US-E-29 908**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Geke, Jürgen, Dr., Stoffeler Damm 108, D-4000 Düsseldorf (DE)**
Erfinder: **Stedry, Bernd, Eichendorff Strasse 11, D-4152 Kempen 1 (DE)**

EP 0 116 151 B1

## Beschreibung

Gegenstand der Erfindung ist ein Verfahren zur Regenerierung alkalischer und neutraler Reinigungsmittellösungen, die mit überwiegend anionisch emulgierten mineralischen und/oder nativen Ölen verunreinigt sind.

Für die Entfettung und Reinigung im industriellen Bereich, insbesondere von metallischen Oberflächen, werden wässrige Lösungen verwendet, die Tenside und evtl. sog. Buildersubstanzen, wie Alkalihydroxide, Alkalicarbonate, -silikate, -phosphate, Komplexbildner und organische oder anorganische Korrosionsschutzmittel enthalten. Bei der Verwendung werden diese Reinigungsmittellösungen durch Mineralöl und/oder native Öle, denen Emulgatoren, Korrosionsschutzmittel und andere Öladditive zugesetzt sein können, verunreinigt. Durch die aufgenommenen Verunreinigungen, die durch evtl. im Öle enthaltene Emulgatoren und die Tenside des Reinigungsmittels in der Lösung emulgiert werden, werden die wässrigen Lösungen in ihrer Wirksamkeit beeinträchtigt und schließlich unwirksam. Die Lösungen müssen dann erneuert werden.

Vor dem Ablassen der gebrauchten Lösungen müssen diese entsprechend den Vorschriften von Öl befreit und, wenn sie alkalisch sind, neutralisiert werden. Mit der Neutralisation allein ist im allgemeinen keine ausreichende Entölung verbunden. Es ist dann eine Emulsionsspaltung vorzunehmen. Diese kann nach verschiedenen Verfahren, z.B. durch Erniedrigung des pH-Wertes auf ca 1, Aufsalzen der Lösung oder Zusatz von Flockungsmitteln, wie Aluminium- oder Eisensalzen im sauren Bereich, und erneuter Neutralisation erfolgen.

Bei dem Ablassen der Reinigungslösungen und der Abwasseraufbereitung sind die Inhaltsstoffe der Reinigungslösung verloren. Deshalb erscheint es vorteilhaft, gebrauchte Reinigungslösungen zu regenerieren, um sie wiederzuverwenden und die Standzeit der Bäder zu verlängern.

Eine Regenerierung wässriger Entfettungslösungen ist mit Hilfe der Ultrafiltration, Zentrifugalseparatoren und Ringkammerentölern möglich. Bei der Ultrafiltration ist insbesondere ein erheblicher Aufwand an Kosten und apparativer Ausrüstung notwendig. Mit Zentrifugalseparatoren und Ringkammerentölern können jedoch nur Entfettungslösungen regeneriert werden, bei denen die Öle und Verunreinigungen nicht stabil emulgiert sind. In vielen Fällen werden Öle und Ziehfette abgewaschen und in die Badlösung eingeschleppt, die anionische Emulgatoren enthalten und ohne Einfluß des Reinigungsmittels stabile Emulsionen bilden, die unter Anwendung physikalischer Verfahren nicht demulgiert werden können.

Verfahren der chemischen Demulgation, also Auftrennung von Emulsionen in ihre Bestandteile, sind z.B. aus der US-A-4 029 708 bekannt. Sie beschreibt lineare oberflächenaktive anionische oder mit Säure neutralisierte Polymere, die aus substituierten Oligoaminen, wie z.B. Ethylendiamin oder Diethylentriamin, und bifunktionellen Reagenzien, wie z.B. Epichlorhydrin oder 1,4-Dichlorbuten-2, durch Polymerisation gebildet werden. Alkalien und/oder anionische Tenside enthaltende Emulsionen können jedoch mit diesen Polymeren nicht demulgiert werden.

In der US-E-29 908 wird ein Verfahren zur Abtrennung von Öl aus mit Öl verunreinigten Abwässern beschrieben. Hierbei wird ein wasserlösliches kationisches Polymeres eingesetzt, das durch Polymerisation von Epichlorhydrin mit einem Alkylen-polyamin gewonnen wird. Dieses Verfahren - bei welchem eine Änderung des pH-Wertes auf einen Wert von ca. 7 vorgesehen ist - führt zu einer Ausbildung von Plocken bzw. eines Koagulates.

Ferner wird in der DE-A-24 12 452 ein Verfahren zur Entfernung von Ölen, Lösungsmitteln und Lackstoffen aus Abwässern beschrieben, bei welchem diese Abwässer mit sogenannten Trägerstoffen und Flockungsmitteln behandelt werden. Als Flockungsmittel kommen hierbei Polyacrylamide, Polyacrylate, Polyimine sowie Polyamidamine in Frage. Diese Flockungsmittel alleine bewirken jedoch nicht die Bildung der hierbei erwünschten Koagulate bzw. Flocken. Hierzu sind die sogenannten Trägerstoffe, d.h. modifizierte Polysaccharide mit anionischen oder kationischen Eigenschaften, unentbehrlich. Erst die Verwendung dieser Kombination führt zur Ausbildung von Koagulaten in Form einer grobflockigen, voluminös zusammenhängenden Schwimmschicht.

Werden jedoch Öle oder organische Lösungsmittel durch entsprechende Zusätze in den Abwässern stabil emulgiert, so wird die Wirkung der beschriebenen Mischungen von Stärkederivaten und Flockungsmitteln stark herabgesetzt oder sogar aufgehoben, da eine adsorptive Anlagerung der Stärkederivate an die zu entfernenden organischen Inhaltsstoffe des Abwassers und die nachfolgende Koagulation durch die genannten Flockungsmittel nur dann möglich ist, wenn die organischen Stoffe "frei" im Wasser suspendiert und nicht von Emulgatormolekülen umhüllt sind. Bevor also eine Abtrennung aus den verunreinigten Wässern erfolgen kann, müssen evtl. vorhandene Emulsionen erst gespalten werden.

Wässrige Lösungen für die Entfettung und Reinigung metallischer Oberflächen im industriellen Bereich haben jedoch in den meisten Fällen nicht nur neutrale bis alkalische pH-Werte, sondern sind auch mit emulgierten mineralischen und/oder nativen Ölen verunreinigt, insbesondere mit solchen Ölen und Fetten, die nach Zusatz entsprechender Emulgatoren selbstemulgierend wirken. Die Natur der Emulgatoren ist in der Summe überwiegend anionisch. Zudem enthalten die Reinigungs- und Entfettungslösungen häufig Alkalien wie Alkalihydroxide, Alkalicarbonate und Alkaliborate, -silikate und -phosphate sowie Komplexbildner wie komplexierende Phosphonsäuren oder Phosphonocarbonsäuren, insbesondere 1-Hydroxyalkan-1,1-diphosphonsäure, 1-Aminoalkan-1,1-diphosphonsäure oder Aminotrimethylentriphosphonsäure bzw. deren Alkalisalze sowie häufig anorganische und organische Korrosionsinhibitoren.

Derartig zusammengesetzte verunreinigte Reinigungslösungen konnten bisher nicht auf einfache Weise von Ölen oder anderen organischen Beimengungen befreit werden.

Der vorliegenden Erfindung liegt die Aufgabe zugrunde, die genannten Verunreinigungen in einfacher Weise aus den Reinigungslösungen zu entfernen.

Es wurde nämlich gefunden, daß alkalische und neutrale Reinigungsmittellösungen, die mit emulgierten mineralischen und/oder nativen Ölen verunreinigt sind, mit chemischen Verfahren einfach regeneriert werden können.

Dementsprechend betrifft die vorliegende Erfindung ein Verfahren zum Regenerieren bzw. zum Recycling von wäßrigen alkalischen bzw. neutralen Entfettungs- und Reinigungslösungen, die mit überwiegend anionisch emulgierten mineralischen und/oder nativen Ölen verunreinigt sind, durch Behandeln derselben mit kationischen Tensiden und/oder kationisch modifizierten Polymeren, welches dadurch gekennzeichnet ist,

daß man den Lösungen, ohne eine Änderung des pH-Wertes derselben und ohne Bildung von Koagulaten bzw. von Flocken in denselben,

a) kationische Tenside in Form von

aa) Ammoniumsalzen der allgemeinen Formel I
$R^1R^2R^3R^4N^+X^-$ (I)
in welcher $R^1$ und $R^2$ jeweils einen Methylrest, $R^3$ einen Methyl-, Hydroxyethyl-, Benzyl-, 2-Hydroxydodecyl- oder 2-Hydroxyhexadecylrest und $R^4$ einen 2-Hydroxydodecyl-, 2-Hydroxyhexadecyl-, Lauryl-, Hexadecyl- oder Stearylrest bedeuten,

oder

ab) Ammoniumsalzen der vorstehenden Formel I, in welcher $R^1$, $R^2$ und $R^3$ jeweils $(Ethylenoxid)_n$-Gruppen, mit n = 1 bis 6, und $R^4$ einen Alkylrest mit 10 bis 20 C-Atomen bedeuten,

oder

ac) Pyridiniumsalzen der allgemeinen Formel II
$C_5H_5N^+-RX^-$ (II)
in welcher R einen Alkylrest mit 10 bis 20 C-Atomen, vorzugsweise mit 12 bis 16 C-Atomen, bedeutet

und X in beiden allgemeinen Formeln für ein Anion aus der Gruppe Hydroxid, Chlorid, Bromid, Sulfat, Nitrat, Phosphat und vorzugsweise Borat steht

und/oder

b) kationisch modifizierte Polymere in Form von

ba) protoniertem Polyethylenimin,

bb) methyliertem Polyethylenimin,

bc) protoniertem N,N-

Dimethylaminoethylacrylat-acrylamidcopolymerisat als Chlorid,

bd) Polydiallyldimethylammoniumchlorid oder

be) Poly-N-methylvinylpyridiniumchlorid,

wobei die Molekulargewichte dieser Polymeren im Bereich von $5 \times 10^4$ und $5 \times 10^7$, vorzugsweise $7,5 \times 10^4$ und $5 \times 10^6$, liegen, zusetzt, nach erfolgter Spaltung der Emulsion das abgeschiedene Öl in geeigneter, an sich bekannter Weise abtrennt und anschließend die Reinigungslösung zurückführt.

Kationen mit Substituenten R niederer C-Zahl am Stickstoff, wie Tetramethylammonium- oder Tetraethylammoniumverbindungen, sind nach dem erfindungsgemäßen Verfahren nicht einsetzbar. Vielmehr sind als kationische Tenside solche Ammoniumverbindungen der Formel I geeignet, in denen $R^1$ und $R^2$ Methyl, $R^3$ Methyl, Hydroxyethyl, Benzyl, 2-Hydroxydodecyl oder 2-Hydroxyhexadecyl und $R^4$ 2-Hydroxydodecyl, 2-Hydroxyhexadecyl, Lauryl, Hexadecyl oder Stearyl sind, und das Anion X aus der Gruppe Hydroxid, Chlorid, Bromid, Sulfat, Nitrat, Phosphat, vorzugweise Borat, ausgewählt ist.

Weiterhin werden als Kationtenside Verbindungen der allgemeinen Formel $R^1R^2R^3R^4N^+X^-$ eingesetzt, in der $R^1$, $R^2$ und $R^3$ $(Ethylenoxid)_n$-Gruppen sind, wobei n 1 - 6 bedeutet, $R^4$ ein Alkylrest mit 10 - 20 Kohlenstoffatomen ist und X Anionen aus der Gruppe Hydroxid, Chlorid, Bromid, Sulfat, Nitrat, Phosphat, vorzugsweise Borat, sind.

Als Kationentenside werden auch Pyridiniumsalze der allgemeinen Formel $C_5H_5N^+-RX^-$ verwendet, in der R ein Alkylrest mit 10 - 20 Kohlenstoffatomen, vorzugsweise mit 12 - 16 Kohlenstoffatomen, und X Anionen aus der Gruppe Hydroxid, Chlorid, Bromid, Sulfat, Nitrat, Phosphat, vorzugsweise Borat, sind.

Als kationisch modifizierte Polymere kommen in Frage: protoniertes Polyethylenimin, methyliertes Polyethylenimin, protoniertes N,N-Dimethylaminoethyl-acrylat-acrylamidcopolymerisat als Chlorid, Polydiallyldimethylammoniumchlorid oder Poly-N-methylvinylpyridiniumchlorid.

Der kationische Modifizierungsgrad ist dabei unterschiedlich und hängt ab vom neutralen Ausgangspolymeren, von der entsprechenden Säure zur Protonierung bzw. von dem entsprechenden Alkylierungsagenz.

Die Molekulargewichte der im erfindungsgemäßen Verfahren verwendeten kationischen Polymere liegen zwischen $5 \times 10^4$ und $5 \times 10^7$, vorzugsweise zwischen $7,5 \times 10^4$ und $5 \times 10^6$. Bevorzugt werden protoniertes Polyethylenimin (25 % AS), methyliertes Polyethylenimin (25 % AS) oder protoniertes N,N-Dimethylaminoethylacrylat-acrylamidcopolymerisat (100 % AS) verwendet.

Die genannten Kationtenside können den verunreinigten Reinigungslösungen entweder allein oder auch in Verbindung mit einem kationischen Polymeren zugesetzt werden.

Die genannten Kationtenside bzw. Tensidpolymerkombinationen werden bei Raumtemperatur bis 80° C den durch Öle und anionischen Emulgatoren verunreinigten Reinigungslösungen zugesetzt, wonach praktisch augenblicklich eine Spaltung der Emulsionen erfolgt und das sich nun abscheidende Öl in geeigneter Weise, z.B. über einen Separator oder Ringkammerentöler, abgetrennt und die Anwendungsflüssigkeit in das Reinigungsbad zurückgeführt werden kann.

Der durch die Regeneration verlorene Anteil der Anwendungslösung wird durch Zugabe von Wasser und Nachschärfen mit Reinigungsmittel bis zur Sollkonzentration ausgeglichen. Die Reinigungslösung ist im allgemeinen wieder voll wirksam. Nur in Einzelfällen ist eine Ergänzung des Anteils an organischen Substanzen, insbesondere des Tensidgehalts, erforderlich. Eine pH-Wertveränderung der Reinigerlösung, die zu einer Beeinträchtigung ihrer Wirksamkeit führen würde, tritt bei der Regeneration nicht ein. Das Regenerierverfahren kann für die gleiche Reinigungslösung mit erneuter Verunreinigung wiederholt durchgeführt werden.

Die kationischen Demulgatoren können entweder als solche zur Anwendungslösung zugegeben werden oder aber mit einem Anteil an nichtionischen Entschäumern, um bei evtl. Überschuß an Demulgator störenden Schaum, insbesondere bei Spritzverfahren, zu vermeiden.

Beispiele bekannter Antischaummittel sind Blockpolymerisate aus Ethylenoxid und Propylenoxid bzw. Anlagerungsprodukte von Ethylenoxid und Propylenoxid an Ethylendiamin oder Fettalkohole.

Es entsteht somit kein Abwasser. Der Korrosionsschutz, insbesondere von Neutralreinigerlösungen, bleibt erhalten, wenn die Gegenionen der Kationen z.B. Borate oder Phosphate sind. Feste Stoffe müssen durch Siebe ausgefiltert werden.

Die kationischen Demulgatoren können je nach Anwendungszweck in beliebigen Mengen verwendet werden, z.B. in einem stöchiometrischen Unterschuß zur Aufrechterhaltung eines Restölgehaltes oder im stöchiometrischen Überschuß, um möglichst vollständige und schnelle Abtrennung der Öle zu erzielen. Bevorzugt werden die kationischen Demulgatoren in äquivalenten Mengen, bezogen auf die eingeschleppten anionischen Emulgatoren, verwendet.

Das erfindungsgemäße Verfahren wird durch die nachfolgenden Beispiele erläutert.

Die Beispiele wurden mit zwei handelsüblichen, stark selbstemulgierenden Bohrölen durchgeführt, die überwiegend anionische Emulgatoren enthalten:

Bohröl 1:
5,43 mmol Sulfonat/100 g
17,14 mmol Seife/100 g

Bohröl 2:
7,43 mmol Sulfonat/100 g
15,71 mmol Seife/100 g

Zahl und Natur der getesteten Demulgatoren sind der nachfolgenden Tabelle zu entnehmen.

**Demulgator**

1 Lauryldimethylbenzylammoniumchlorid 35 % AS

2 Protoniertes Polyethyleniminchlorid 25 % AS

3 2-Hydroxy-hexadecyl-dimethylethanolammoniumborat 25 % AS

4 2-Hydroxydodecyl-dimethylethanolammoniumborat 25 % AS

5 Tetramethylammoniumhydroxid 10 % AS

6 Tetraethylammoniumhydroxid 20 % AS

7 Bis- [(2-hydroxydodecyl)-dimethyl-(2-hydroxyethyl)ammonium]hydrogenphosphat 32,2 % AS

8 Tris-[(2-hydroxydodecyl)-dimethyl-(2-hydroxyethyl)ammonium]hydrogenphosphat 30,6 % AS

9 methyliertes Polyethyleniminchlorid 25 % AS

10 protonierte N,N-Dimethylaminoethylacrylat-acrylamid-Copolymerisat als Chlorid 100 % AS

11 Laurylpyridiniumbisulfat 54 % AS

12. Tris-(oligooxyethyl)-alkylammonium-hydroxid
Alkylrest R = $C_{16-18}$
EO-Gesamtgehalt = 10EO - 50 % AS
(AS = Aktiv-Substanz).
(Nr 5 und 6 sind Vergleichssubstanzen)

**Beispiel 1 - Neutralreiniger**

Beschrieben wird die Spaltung in Gegenwart eines Neutralreinigers auf folgender Basis:
35 % Alkanolamin - $C_8$-$C_{12}$-Carboxylat
2 % 1-Hydroxyethan-1,1-diphosphonsäure
0,5 % Mercaptobenzthiazol
3 % Blockpolymerisat aus Ethylendiamin + 30 mol Ethylenoxid sowie 60 mol Propylenoxid
1 % Anlagerungsprodukt von 10 mol Ethylenoxid an $C_{12}$-$C_{16}$-Fettamin
58,5 % Wasser

a. Emulsionsspaltung

Die Emulsionsspaltung wurde nach folgendem Test durchgeführt:

10 g Bohröl wurden bei Raumtemperatur mit 40 g einer 2 %igen wässrigen Neutralreinigerlösung in einem 270 ml Ölabscheidungskolben emulgiert. Eine äquivalente Menge kationischer Demulgator wurde zugegeben. Unter Schütteln wurde mit 2 %iger heißer Neutralreinigerlösung aufgefüllt. Die Spaltung setzte spontan ein. Zur vollständigen Ölseparierung aus der sich zunächst abscheidenden "emulsionsartigen Phase" temperte man die Flüssigkeit zwei Stunden bei 80° C.

Ergebnis:

Nur mit Tetramethylammoniumhydroxid und Tetraethylammoniumhydroxid wurde keinerlei Trennung, auch nicht teilweise, festgetellt. Die übrigen Testsubstanzen trennten die Emulsion vollständig, Das Öl wurde praktisch quantitativ abgetrennt (Restölgehalt jeweils weniger als 140 ppm).

b. Korrosionsschutz:

Zur Ermittlung des Korrosionsschutzes wurde der Test nach DIN 51 360/2 herangezogen. Dabei wurden 2 g Graugußspäne (GG 30 nach DIN 1691) auf ein Filterpapier (D = 9 cm) in einem Kreis von d = 5 verteilt und mit 2 ml Anwendungsflüssigkeit benetzt. Filter, Späne und Flüssigkeit befanden sich in einer geschlossenen Petrischale. Nach 2 Stunden wurden die Späne vom Filter entfernt und je nach Konzentration wurden Rostpunkte sichtbar (oder auch nicht).

Zur Durchführung wurden 1, 2 und 3 %ige Lösungen des Neutralreinigers in 20°d hartem Wasser mit 1 % Bohröl 1 oder 2 vermischt und dann mit kationischem Demulgator versetzt. Nach 2 Stunden wurde der Korrosionsschutz der wässrigen Phasen ermittelt.

Ergebnis:

Der Korrosionsschutz der regenerierten Lösungen war gleich gut wie der der Originalneutralreinigerlösungen. Nur mit dem Demulgator 1 und 2 wurde ein Nachlassen des Korrosionsschutzes festgestellt.

C: Zusatz von Antischaummittel:

10 g Bohröl 2 wurden bei Raumtemperatur mit 40 g einer 2 %igen wässrigen Neutralreinigerlösung in einem 270 ml Ölabscheidungskolben emulgiert.

Der kationische Demulgator wurde dieser Emulsion in stöchiometrischem Überschuß (Verhältnis Demulgator zu anionischem Emulgator = 1,2 : 1) zugegeben. Ferner wurde das Anlagerungsprodukt von 30 Mol Ethylenoxid und 60 mol Propylenoxid an Ethylendiamin als Antischaummittel zugegeben (Verhältnis Demulgator : Antischaummittel = 1 : 1). Unter Schütteln wurde mit 2 %iger wässriger Neutralreinigerlösung aufgefüllt. Die Spaltung setzt spontan ein. Der Restölgehalt lag unter 120 ppm. Die rückgeführte Reinigungslösung konnte schaumfrei gespritzt werden.

## Beispiele 2 - 4: Alkalische Reinigungsmittel

Beschrieben wird die Spaltung von Emulsionen in Gegenwart alkalischer Reinigungsmittel, die die jeweils zu Beginn der Beispiele angegebene Zusammensetzung hatten:

## Beispiel 2

63 % Natriummetasilikat
14 % Natriumhydroxid
15 % Soda
2 % Fettalkohol + 14 Ethylenoxid
3 % Alkylbenzolsulfonat
Zu einer 4 %igen Reinigerlösung in Leitungswasser wurden bei Raumtemperatur 2 % Bohröl-Konzentrat emulgiert, eine mehr als äquivalente Menge (1:1,1) Demulgator 8 zugegeben und ca 3 min. gut gerührt. Man ließ die Mischung stehen, die Separierung des Öls begann sofort. Nach 1 Stunde waren in der fast klaren, wässrigen Phase noch 97 ppm Öl enthalten.

## Beispiel 3

60 % Natriummetasilikat
10 % Natriumhydroxid
15 % Soda
10 % Natriumdiphosphat
2,5 % Fettalkohol + 14 Ethylenoxid.
2,5 % Kokosamin + 12 Ethylenoxid
Wie in Beispiel 2 beschrieben, wurden zu je einer 3 %igen Reinigerlösung doppelt äquivalente Mengen Demulgator 1 und Demulgator 7 zur Emulsionsspaltung gegeben. Die Separierung begann sofort, wobei die wässrige Phase nahezu klar war. Restölgehalt 85 ppm bzw. 123 ppm.

## Beispiel 4

50 % Natriumdiphosphat
15 % Natriumtriphosphat
15 % Trinatriumphosphat
10 % Soda
7,7 % Nonylphenol + 14 Ethylenoxid
2,3 % Kokosfettsäuremonoethanolamid + 4 Ethylenoxid
Wie in Beispielen 2 und 3 beschrieben, wurden je einer belasteten 2 %igen Reinigerlösung doppelt äquivalente Mengen Demulgator 7 und Demulgator 8 zugegeben. Die Separierung erfolgte spontan, wobei die wässrige Phase nahezu klar wurde. Restölgehalt 157 ppm bzw. 106 ppm.

Die Anwesenheit von Pyro- oder Polymerphosphaten und/oder anionischen Tensiden bedingte eine höhere Zugabe an Demulgator zur vollständigen und raschen Demulgierung.

## Patentansprüche

1) Verfahren zum Regenerieren bzw. zum Recycling von wäßrigen alkalischen bzw. neutralen Entfettungs- und Reinigungslösungen, die mit überwiegend anionisch emulgierten mineralischen und/oder nativen Ölen verunreinigt sind, durch Behandeln derselben mit kationischen Tensiden und/oder kationisch modifizierten Polymeren, dadurch gekennzeichnet, daß man den Lösungen, ohne eine Änderung des pH-Wertes derselben und ohne Bildung von Koagulaten bzw. von Flocken in denselben,

a) kationische Tenside in Form von

aa) Ammoniumsalzen der allgemeinen Formel I

$R^1R^2R^3R^4N^+X^-$ (I)

in welcher $R^1$ und $R^2$ jeweils einen Methylrest, $R^3$ einen Methyl-, Hydroxyethyl-, Benzyl-, 2-Hydroxydodecyl- oder 2-Hydroxyhexadecylrest und $R^4$ einen 2-Hydroxydodecyl-, 2-Hydroxyhexadecyl-, Lauryl-, Hexadecyl- oder Stearylrest bedeuten,

oder

ab) Ammoniumsalzen der vorstehenden Formel I, in welcher $R^1$, $R^2$ und $R^3$ jeweils (Ethylenoxid)$_n$-Gruppen, mit n = 1 bis 6, und $R^4$ einen Alkylrest mit 10 bis 20 C-Atomen bedeuten,

oder

ac) Pyridiniumsalzen der allgemeinen Formel II

$C_5H_5N^+$-RX$^-$ (II)

in welcher R einen Alkylrest mit 10 bis 20 C-Atomen, vorzugsweise mit 12 bis 16 C-Atomen, bedeutet

und X in beiden allgemeinen Formeln für ein Anion aus der Gruppe Hydroxid, Chlorid, Bromid, Sulfat, Nitrat, Phosphat und vorzugsweise Borat steht

und/oder

b) kationisch modifizierte Polymere in Form von

ba) protoniertem Polyethylenimin,

bb) methyliertem Polyethylenimin,

bc) protoniertem N,N-Dimethylaminoethylacrylat-acrylamid-Copolymerisat als Chlorid,

bd) Polydiallyldimethylammoniumchlorid oder

be) Poly-N-methylvinylpyridiniumchlorid,

wobei die Molekulargewichte dieser Polymeren im Bereich von $5 \times 10^4$ und $5 \times 10^7$, vorzugsweise $7{,}5 \times 10^4$ und $5 \times 10^6$, liegen, zusetzt, nach erfolgter Spaltung der Emulsion das abgeschiedene Öl in geeigneter, an sich bekannter Weise abtrennt und anschließend die Reinigungslösung zurückführt.

2) Verfahren nach Anspruch 1, dadurch gekennzeichnet, daß man der Reinigungslösung zusätzlich ein nichtionisches Antischaummittel zusetzt.

3) Verfahren nach Anspruch 1 und 2, dadurch gekennzeichnet, daß man die Reinigungslösung vor ihrer Rückführung durch Zugabe von Wasser bzw. von Reinigungsmittel bis zur Sollkonzentration ergänzt.

## Claims

1. A process for the regeneration or recycling of aqueous alkaline or neutral degreasing and cleaning solutions contaminated with predominantly anionically emulsified mineral and/or native oils by treatment of these solutions with cationic surfactants and/or cationically modified polymers, characterized in that

a) cationic surfactants in the form of

aa) ammonium salts corresponding to the following general formula

$R^1R^2R^3R^4N^+X^-$ (I)

in which $R^1$ and $R^2$ each represent a methyl radical, $R^3$ is a methyl, hydroxyethyl, benzyl, 2-hydroxydodecyl or 2-hydroxyhexadecyl radical and $R^4$ is a 2-hydroxydodecyl, 2-hydroxyhexadecyl, lauryl, hexadecyl or stearyl radical,

or

ab) ammonium salts corresponding to formula I above in which $R^1$, $R^2$ and $R^3$ are each (ethylene oxide)$_n$ groups with n = 1 to 6 and $R^4$ is a $C_{10}$-$C_{20}$ radical,

or

ac) pyridinium salts corresponding to the following general formula

$C_5H_5N^+$-RX$^-$ (II)

in which R is a $C_{10}$-$C_{20}$ and preferably $C_{12}$-$C_{16}$ radical

and X in both general formulae represents an anion from the group comprising hydroxide, chloride, bromide, sulfate, nitrate, phosphate and preferably borate,

and/or

b) cationically modified polymers in the form of

ba) protonated polyethylene imine,

bb) methylated polyethylene imine,

bc) protonated N,N-dimethylaminoethyl acrylate/acrylamide copolymer as chloride,

bd) polydiallyl dimethyl ammonium chloride or

be) poly-N-methyl vinyl pyridinium chloride,

the molecular weights of these polymers being in the range of $5 \times 10^4$ to $5 \times 10^7$ and preferably in the range of $7{.}5 \times 10^4$ to $5 \times 10^6$,

are added to the solutions without any change in the pH-value thereof and without any coagulation or flocculation therein, the oil deposited after breaking of the emulsion is separated off by any suitable method known per se and the cleaning solution is then recycled.

2. A process as claimed in Claim 1, characterized in that a nonionic antifoam agent is additionally added to the cleaning solution.

3. A process as claimed in Claims 1 and 2, characterized in that, before recycling, the cleaning solution is made up to the desired concentration by addition of water or cleaning preparation.

## Revendications

1°) Procédé pour régénérer ou recycler des solutions aqueuses, alcalines ou neutres, de dégraissage et de nettoyage qui sont souillées par des huiles minérales et/ou naturelles émulsionnées, principalement anioniques, par traitement de ces solutions avec des agents tensio-actifs cationiques, et/ou des polymères modifiés cationiquement, procédé caractérisé en ce que l'on ajoute aux solutions, sans que leur pH soit modifié, et sans qu'il s'y forme des coagulats ou une floculation,

a) des agents tensio-actifs cationiques sous la forme de

aa), des sels d'ammonium de formule générale
$R^1R^2R^3R^4N^+X^-$ (I)

où $R^1$ et $R^2$ représentent, chaque fois, un reste
méthyl, $R^3$ un reste méthyl, hydroxyéthyl, benzyl,
2-hydroxydodécyl ou 2-hydroxyhexadécyl, et $R^4$,
un reste 2-hydroxydodécyl, 2-hydroxyhexadécyl,
lauryl, hexadécyl ou stéaryl,

ou ab) des sels d'ammonium de formule I cidessus où $R^1$, $R^2$ et $R^3$ représentent chaque fois
des groupes (oxyde d'éthylène)$_n$, avec n = 1 à 6,
et $R^4$ un reste alcoyl avec 10 à 20 atomes C,

ou ac) des sels de pyridinium de formule
générale II

$C_5H_5N^+$-R $X^-$ (II)

où R représente un reste alcoyl avec 10 à 20
atomes de C, de préférence avec 12 à 16 atomes
de C et X, dans les deux formules générales, est
mis pour un anion du groupe des hydroxydes,
chlorures, bromures, sulfates, nitrates,
phosphates et de préférence borates, et/ou

b) des polymères modifiés cationiquement
sous la forme de

ba) polyéthylènimines protonisés,

bb) polyéthylènimines méthylés,

bc) copolymérisat de N,N-
diméthylaminoéthylacrylateacrylamide sous la
forme de chlorure, protonisé,

bd) chlorure de polydiallyldiméthylammonium,
ou

be) chlorure de poly-N-méthylvinylpyridinium,

les poids moléculaires de ces polymères étant
de l'ordre de $5 \times 10^4$ à $5 \times 10^7$, de préférence $7,5 \times 10^4$ et $5 \times 10^6$, qu'après la dissociation de
l'émulsion, on sépare l'huile séparée d'une façon
appropriée connue en soi, et ensuite recycle la
solution de nettoyage.

2°) Procédé suivant la revendication 1,
caractérisé en ce que l'on ajoute à la solution de
nettoyage, supplémentairement, un anti-mousse
non-ionique.

3°) Procédé suivant l'une des revendications 1
et 2, caractérisé en ce qu'avant de la recycler, on
complète la solution de nettoyage par addition
d'eau, ou d'agents de nettoyage jusqu'à sa
concentration théorique.